# EUROPEAN PATENT APPLICATION

(11) **EP 1 357 748 A2**
(43) Date of publication of application: **29.10.2003**
(21) Application number: 03252635.2
(22) Date of filing: 25.04.2003
(51) Int. Cl.: H04N 5/76

(54) **Recording/reproducing apparatus**

(30) Priority: 25.04.2002 JP 2002123475
(71) Applicant: ORION ELECTRIC CO., Ltd., Takefu-City, Fukui 915 (JP)
(72) Inventor: Takinami, Eiichirou, Takefu-City, Fukui (JP); Inotani, Kazunori, Takefu-City, Fukui (JP); Miyazaki, Hiroyuki, Takefu-City, Fukui (JP)
(74) Representative: Nettleton, John Victor

(57) **Abstract**

The present invention provides a recording/reproducing apparatus that can easily identify programs set for renewal recording in programs set for timer recording reservation. To a respective program set for renewal recording, a different reservation number is added as a specific identifying mark, and said reservation numbers are displayed on a monitor together with program information such as date and time for recording and so forth. Among recorded programs, programs set for renewal recording are added a renewal recording number as an identifying mark. To other programs, no identifying mark is added. Said renewal recording number is the same as the reservation number added to a program set for renewal recording at the time of reservation.

## Description

### BACKGROUND OF THE INVENTION

### Field of the Invention:

The present invention relates to a recording/reproducing apparatus having a renewal recording function for performing overwrite recording of programs broadcasted either every day or every week in series on a random-access recording medium such as hard disc, DVD and so forth.

### Prior Art:

In a recent recording/reproducing apparatus for recording and reproducing TV broadcast programs, there have been used disc-shaped recording means such as hard disc, DVD-R, DVD-RW and so forth as a random-access mass-storage means.

When a television program is recorded on such a disc-shaped recording medium, one file is formed on a predetermined area of the disc-shaped recording medium, and recording data encoding received video/audio signals are stored therein.

As one method of recording a broadcast program, a timer recording is well known. (In this case,) When necessary information pertaining to desired broadcast programs is input in order for the desired broadcast programs to be recorded at the designated time and date, the recording/reproducing apparatus automatically starts timer recording.

There are two ways of timer recording reservation. One is a weekly recording reservation in which timer recording is performed at the designated time of each designated day in every week. The other is a daily recording reservation in which timer recording is performed at the designated time every day, e.g., from Monday through Friday, from Monday through Saturday, or from Saturday through Sunday. In both cases of the weekly recording reservation and the daily recording reservation, a user can select renewal recording or usual timer recording. Renewal recording records new programs by overwrite recording every time on the same area of the recording medium. On the other hand, timer recording records new programs every time, without overwriting, on a different area of the recording medium.

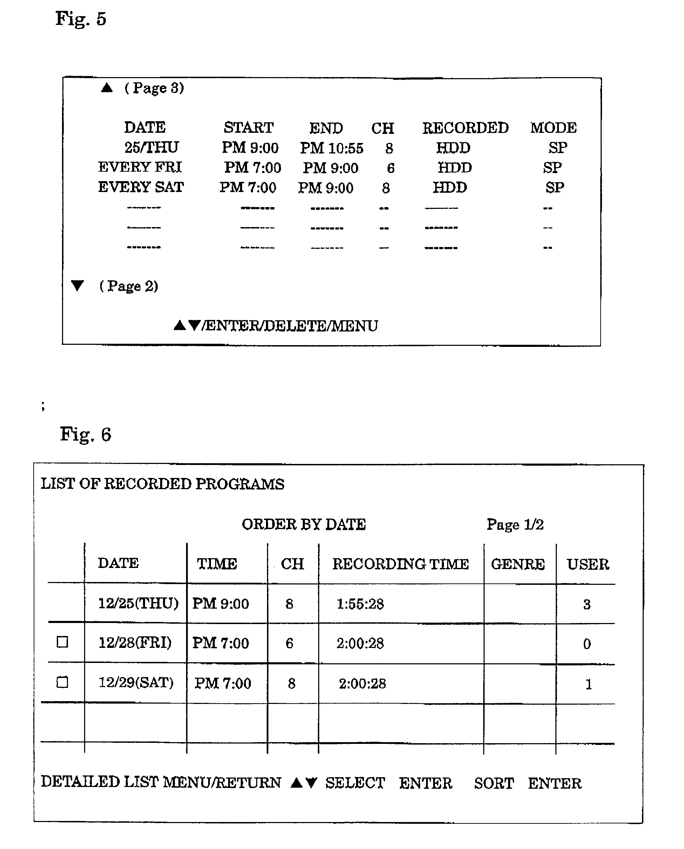

When programs desired for recording are reserved, as shown in Fig. 5, a list panel of timer recording reservations is displayed. The list panel shows program information such as the date and time of a broadcast program, channel number, and recording mode.

Programs recorded on the recording medium on the basis of recording reservation are shown on a list panel of the recorded programs, as shown in Fig. 6. The list panel shows recorded program information such as the date and time, channel number, recording time and so forth. (In this case,) A renewal recording mark "□" is marked on a program recorded by renewal recording.

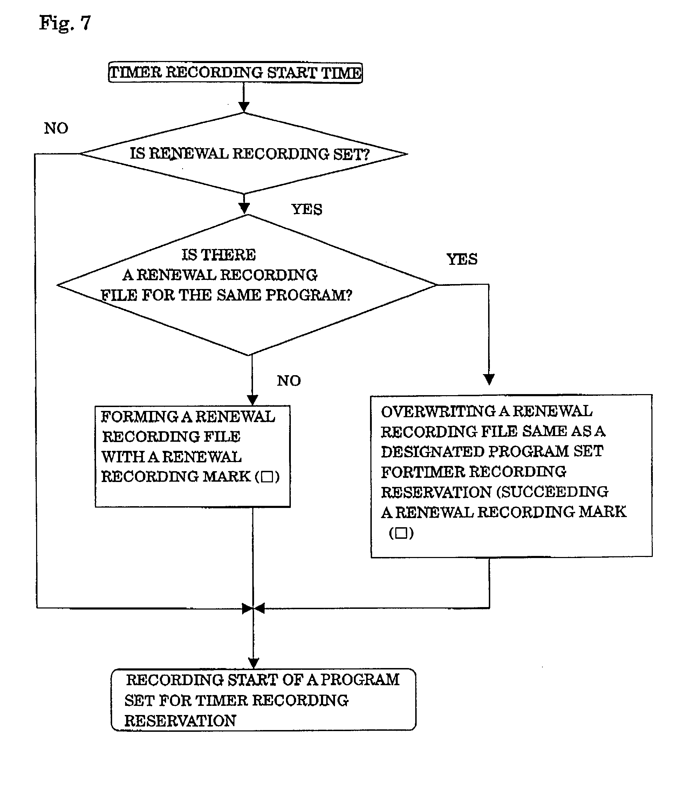

The renewal recording mark is added to the recording program information during the time period between recording reservation and recording start. The sequence of operations is set forth with reference to Fig. 7. When it comes to the set time to start timer recording after timer recording reservation has been made by inputting the program information of desired broadcast programs, it is determined whether or not renewal recording is set. In case no renewal recording is set, recording of the programs reserved for timer recording starts automatically. The renewal recording mark is not added to the recorded program information.

In case renewal recording is set, it is determined whether or not renewal recording files are included in the recorded programs with respect to the same program. If there is no renewal recorded file with respect to the same program, the current timer recording reservation is a new renewal recording. So the renewal recording mark "□" is added to the program information and a renewal recorded file is newly formed. After that, recording of the programs reserved for timer recording starts. If there is the same renewal recorded file, overwrite recording onto the file is prepared. At that time, the renewal recording mark is succeeded.

A user can identify the renewal recorded program by the indication of the renewal recording mark on the list of the recording programs as shown in Fig.6. Therefore, if a previous program is not yet reproduced, the previous program can be kept remained and the current program can be recorded into a new file by removing the setting for renewal recording before the current program is automatically recorded overwriting the previous one, and thus, it is possible to prevent the user from missing the previous program.

As the renewal recording mark is indicated on the list of the recorded programs, a user can identify a program set for renewal recording. However, as there is indicated no renewal recording mark on the list of the timer recording reservations, it is necessary for identifying a program set for renewal recording in the timer recording reservation programs to compare the program information on the list panel of the timer recording reservation including the recording date, the recording start time, and the recording end time with the recorded program information of the list panel of the recorded programs. However, such a comparison is very troublesome and it is likely to cause mistakes.

Further, when a certain program is specified by mistake in the course of the above comparison, there is a possibility that reservation change may be made on an unintended program at the time of reservation change. For example, in the case where a plurality of programs are set for renewal recording, it is likely to happen that reservation change is made not on an intended program but on an unintended program.

### SUMMARY OF THE INVENTION

It is therefore an object of the present invention to provide a recording/reproducing apparatus which can easily identify programs set for renewal recording in programs set for timer recording reservation.

In order to solve the above problems, the present invention provides the recording/reproducing apparatus comprising a reservation means for setting a program to be recorded on a recording medium, a reservation list display means for displaying a list of program information of reserved programs, and a program list display means for displaying a list of program information of recorded programs, wherein the reservation list display means indicates a specific identifying mark added to a reserved program and the program list display means indicates the identifying mark on a program set for renewal recording.

As a result, as for a program set for renewal recording, the identifying mark added at the time of recording reservation is added to program information at the time of recording for indication. Accordingly, a program set for renewal recording comes to have the same identifying mark thereon. Thus, the identifying mark is indicated without discrepancy between a list panel of reservations and a list panel of recorded programs, and so it becomes easy to identify a program set for renewal recording.

The present invention also provides the recording/reproducing apparatus comprising a designation means for adding a specific identifying mark to a reserved program, a reservation list display means for displaying a list of program information of reserved programs together with the identifying mark, a modification means for modifying a identifying mark of programs other than programs set for renewal recording to a different identifying mark from the identifying mark added to reserved programs at the time of recording on the recording medium, and a program list display means for displaying a list of program information of recorded programs together with the identifying mark.

At the time of reservation, each program is added a different identifying mark, respectively. At the time of recording, the same identifying mark as at the time of reservation is added to a program set for renewal recording and the identifying mark is modified to a different identifying mark from at the time of reservation with respect to a program not for renewal recording. Modification of the identifying mark includes no mark. In this case, only the identifying marks of the programs set for renewal recording are indicated, and so a user can easily identify the programs for renewal recording.

### BRIEF DESCRIPTION OF THE DRAWINGS

For a better understanding of the invention, reference is made to the accompanying drawings, in which:
Fig. 1 is a block diagram showing one embodiment of a recording/reproducing apparatus according to the present invention;
Fig. 2 is a flow chart at the time an identifying mark is added to a recording program;
Fig. 3 is a view showing a list panel of timer recording reservation;
Fig. 4 is a view showing a list panel of recorded programs;
Fig. 5 is a view showing a list panel of timer recording reservation in prior arts;
Fig. 6 is a view showing a list panel of recorded programs in prior arts; and
Fig. 7 is a flow chart at the time an identifying mark is added to a recording program in prior arts.

### DETAILED DESCRIPTION OF THE PREFERRED EMBODIMENTS

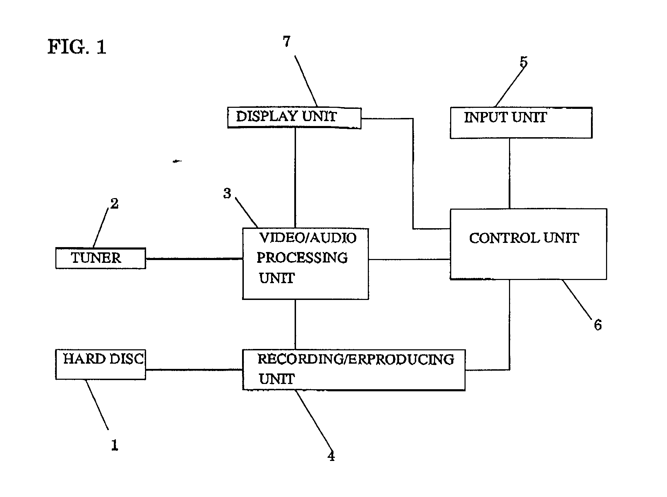

One embodiment of a recording/reproducing apparatus according to the present invention is shown in Fig. 1. The present recording/reproducing apparatus is provided with a random-access hard disc 1 as a recording medium, a tuner 2, a video/audio processing unit 3, a recording/reproducing unit 4, an input unit 5, and a control unit 6.

Waves from a ground wave broadcasting or a BS broadcasting are input to the tuner 2. The tuner 2 selects waves of a selected channel, and the received video/audio signals are output to the video/audio processing unit 3. At the video/audio processing unit 3, the input video/audio signals are demodulated or converted to digital signals. The digital video/audio signals are encoded and output to the recording/reproducing unit 4. At the recording/reproducing unit 4, a file is formed in a predetermined area of the hard disc 1, and subsequently the encoded video/audio signals are wrote therein. Thus, a broadcast program is recorded in the hard disc 1.

When the recorded program is reproduced, the recording/reproducing unit 4 reads out the file from the hard disc 1 and outputs the data stored in the file to the video/audio processing unit 3. At the video/audio processing unit 3, the encoded video/audio signals are decoded and converted to analog signals. The obtained analog video/audio signals are output to a display unit 7 such as a monitor and to a speaker

The input unit 5 is a remote controller or an operation panel provided at the main body of the apparatus, which issues a direction of recording/reproducing of programs. The control unit 6 controls the tuner 2, the video/audio processing unit 3, the recording/reproducing unit 4, and the display unit 7 on the basis of the data input from the input unit 5.

Programs to be recorded on the hard disc 1 are set by inputting program information for timer recording such as the date and time, channel numbers at the input unit 5. Thus, the input unit 5 serves as a reservation means.

The control unit 6 is provided with: a designation means for adding a specific identifying mark to a program set for recording reservation; a reservation list display means for displaying a list of program information of reserved programs together with the identifying mark; a modification means for modifying a identifying mark of programs other than programs set for renewal recording to a different identifying mark from the identifying mark added to reserved programs at the time of recording on the hard disc 1; and a program list display means for displaying a list of program information of recorded programs together with the identifying mark. Namely, a program set for renewal recording has the same identifying mark as added at the time of reservation, and a program set for usual timer recording has a different identifying mark between at the time of reservation and at the time of recording.

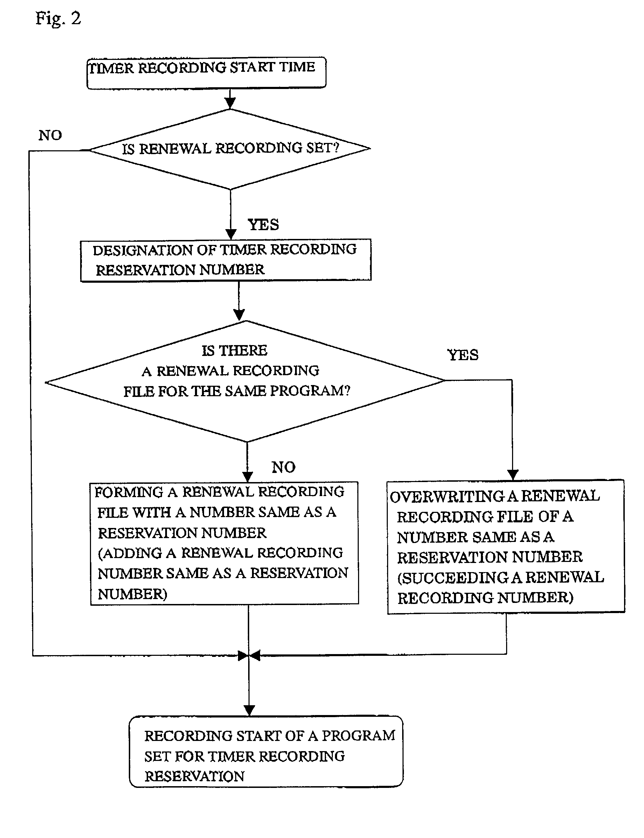

Now, the sequence of operations for adding an identifying mark at the time of recording will be explained with reference to Fig. 2. Timer recording reservation is made by inputting program information of a desired program by means of the input unit 5. When setting a weekly recording reservation or a daily recording reservation, it is selected by ON /OFF direction whether or not renewal recording for overwriting on a recorded program is set.

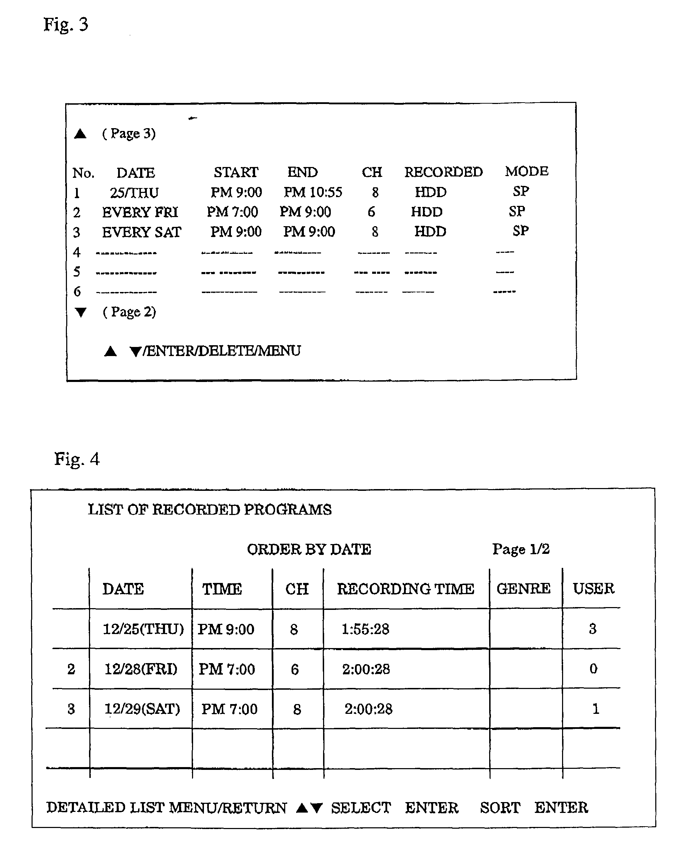

For each of programs set for timer recording reservation, a reservation number as a specific identifying mark is designated. The list of timer recording reservations is displayed as shown in Fig. 3. Reservation numbers 2 and 3 are added to programs set for renewal recording, respectively. The reservation number can be designated from 1 through 16.

When it comes to the set time to start timer recording of a reserved program, it is determined whether or not renewal recording is set on the reserved program. In case no renewal recording is set, recording of the programs reserved for timer recording starts automatically. In case renewal recording is set, the program is designated to which reservation number of the programs set for timer recording corresponds. Next, it is determined whether or not a renewal recording file are included in the recorded programs with respect to the same program. If there is no renewal recording file with respect to the same program, the current timer recording reservation is a new renewal recording. So a renewal recording number that is the same as the reservation number is added to the program information as an identifying mark. And a renewal recorded file is newly formed. After that, recording of the programs reserved for timer recording starts.

If there is the renewal recorded file having the same program information with the program set for renewal recording, overwrite recording onto the file is prepared. At that time, the renewal recording number is succeeded automatically. After that, recording of the programs reserved for timer recording starts.

In this case, however, a program set for renewal recording is overwritten even if the program is not yet reproduced. In view of this, when it comes to a prescribed time before the timer recording starts, a message to the effect that timer recording starts is displayed on the display unit, thereby alerting a user before starting timer recording. If it is desired that a previous program is kept remained, timer recording reservation is changed so as to release the renewal recording by selecting OFF of ON/OFF direction. Thus, a new file for recording a current program is formed on the hard disc 1, and the current program is recorded thereon. If timer recording starts while a previous program is being reproduced, reproducing is forced to stop and a current program is recorded by overwriting the previous one.

Program information of the recorded programs is displayed on a list panel of the recorded programs as shown in Fig. 4. Programs set for renewal recording are shown with renewal reservation numbers 2 and 3. The renewal recording number of each program is the same as the reservation number of each program. A program set for usual timer recording, that is, recording only once, has no identifying mark and a space is kept blank. Namely, at the time of reservation, a reservation number is added as an identifying mark, and at the time of recording, the identifying mark is modified to a space mark that means blank.

Thus, a program set for renewal recording has the same identifying mark between at the list of timer recording reservation and at the list of recorded programs. Therefore, it is possible for a user to identify immediately programs set for renewal recording. Accordingly, when it is desired to stop or modify the setting for renewal recording, the objected program can be identified without fail, thus resulting in prevention of mistakes of modification.

The present invention is not limited to the above-described specific embodiments but is subject to various changes and modifications within the scope of the invention. For example, instead of hard discs, rewritable DVDs, CDs, and semiconductor memories are applicable as a recording medium. Identifying mark may be selected from any other marks than numerals such as letters, symbols, drawings and the like depending on a user's selection. In addition, program information of a program set for renewal recording may be indicated by color in order to differentiate from other programs.

As described heretofore, according to the present invention, both a reserved program set for renewal recording and a recorded program are displayed with a same identifying mark, so that the correspondence between the two can be identified immediately. Consequently, when modifying the setting for renewal recording, the objected program can be selected without fail from a plurality of programs, thus preventing mistakes of modification.

## Claims

1. A recording/reproducing apparatus comprising a reservation means for setting a program to be recorded on a recording medium, a reservation list display means for displaying a list of program information of reserved programs, and a program list display means for displaying a list of program information of recorded programs, wherein said reservation list display means indicates a specific identifying mark added to a reserved program and said program list display means indicates said identifying mark on a program set for renewal recording.

2. A recording/reproducing apparatus comprising a designation means for adding a specific identifying mark to a reserved program, a reservation list display means for displaying a list of program information of reserved programs together with said identifying mark, a modification means for modifying a identifying mark of programs other than programs set for renewal recording to a different identifying mark from the identifying mark added to reserved programs at the time of recording on said recording medium, and a program list display means for displaying a list of program information of recorded programs together with said identifying mark.
